# EUROPEAN PATENT APPLICATION

(11) **EP 2 026 447 A1**
(43) Date of publication of application: **18.02.2009**
(21) Application number: 06756912.9
(22) Date of filing: 02.06.2006
(51) Int. Cl.: H02K 1/18, H02K 3/18

(54) **STATOR FOR ROTATING ELECTRIC MACHINE**

(71) Applicant: Mitsubishi Electric Corporation, Chiyoda-ku Tokyo 100-8310 (JP)
(72) Inventor: UMEDA, Takashi, Tokyo 100-8310 (JP)
(74) Representative: HOFFMANN EITLE
(86) International application number: PCT/JP2006/311077
(87) International publication number: WO 2007/141830

(57) **Abstract**

In a dynamoelectric stator, a coil group is divided into a plurality of coil segments that are adjacent to each other in a circumferential direction of a core. Each of the coil segments includes a plurality of stepped coils that are adjacent to each other in a circumferential direction of the core. Each of the stepped coils has: a large diameter portion that is adjacent to the core back portion; and a small diameter portion that is adjacent to the large diameter portion on a radially inner side of the core and that has a smaller diameter than that of the large diameter portion. A step portion that results from the difference in diameter is formed between each of the large diameter portions and each of the small diameter portions. Positions of the step portions in each of the coil segments are offset toward the radially inner side of the core sequentially from a stepped coil that is positioned at a first circumferential end portion of the core.

## Description

### TECHNICAL FIELD

The present invention relates to a dynamoelectric stator that can be used, for example, in a motor of an elevator hoisting machine, etc.

### BACKGROUND ART

In conventional dynamoelectric stators, winding positions of outermost layers of coils are alternately offset in a radial direction of a core in such a way that the outermost layers do not interfere with the outermost layers of neighboring coils (see Patent Literature 1, for example).

Patent Literature 1
Japanese Patent Laid-Open No. 2005-117821 (Gazette)

### DISCLOSURE OF THE INVENTION

### PROBLEM TO BE SOLVED BY THE INVENTION

In conventional dynamoelectric stators such as that described above, contact between the coils is prevented by offsetting the winding positions of the outermost layers, but there is demand for space factor of the coils to be raised further while preventing contact between the coils.

The present invention aims to solve the above problems and an object of the present invention is to provide a dynamoelectric stator that enables space factor of coils to be raised further while preventing contact between the coils.

### MEANS FOR SOLVING THE PROBLEM

A dynamoelectric stator according to the present invention includes: a core that has an annular core back portion and a plurality of tooth portions that project radially outward from the core back portion; and a coil group that is formed by winding a coil conductor onto the tooth portions by regular winding, wherein: the coil group is divided into a plurality of coil segments that are adjacent to each other in a circumferential direction of the core; each of the coil segments includes a plurality of stepped coils that are adjacent to each other in a circumferential direction of the core; each of the stepped coils has a large diameter portion that is adjacent to the core back portion, and a small diameter portion that is adjacent to the large diameter portion on a radially inner side of the core and that has a smaller diameter than that of the large diameter portion; a step portion that results from the difference in diameter is formed between each of the large diameter portions and each of the small diameter portions; and positions of the step portions in each of the coil segments are offset toward the radially inner side of the core sequentially from a stepped coil that is positioned at a first circumferential end portion of the core.

### BRIEF DESCRIPTION OF THE DRAWINGS

Figure 1 is a cross section of a dynamoelectric stator according to Embodiment 1 of the present invention;
Figure 2 is an enlargement of part of Figure 1; and
Figures 3A and 3B are explanatory diagrams that show a method for winding respective coils from Figure 1.

### BEST MODE FOR CARRYING OUT THE INVENTION

A preferred embodiment of the present invention will now be explained with reference to the drawings.

### Embodiment 1

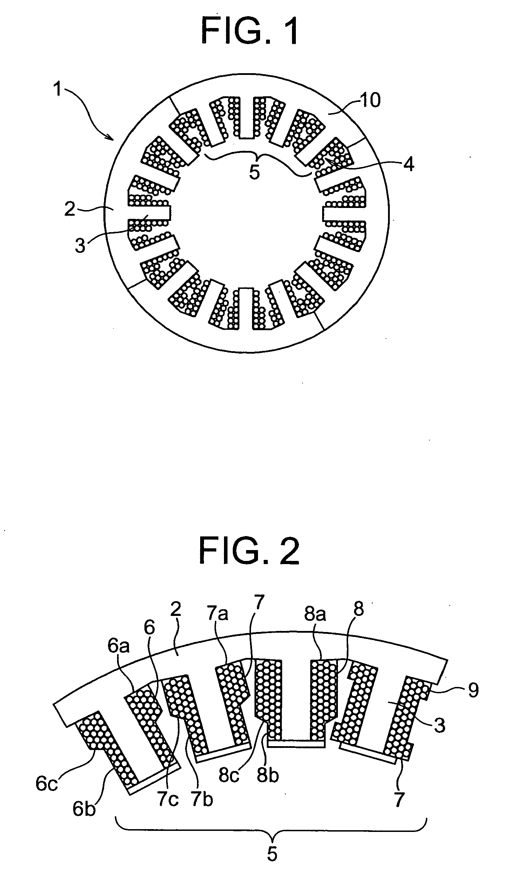

Figure 1 is a cross section of a dynamoelectric stator according to Embodiment 1 of the present invention, and Figure 2 is an enlargement of part of Figure 1. In the figure, a core 1 has: an annular core back portion 2; and a plurality of tooth portions 3 (sixteen in Figure 1) that project radially inward from the core back portion 2.

Coil groups (concentrated winding groups) 4 are disposed inside the core 1. The coil groups 4 are formed by winding coil conductors onto the tooth portions 3 by regular winding. The coil groups 4 is divided into a plurality of coil segments 5 (four in Figure 1) that are adjacent to each other in a circumferential direction of the core 1. The core 1 is divided into a plurality of core segments 10 (four in Figure 1) so as to correspond to the coil segments 5.

Each of the coil segments 5 includes: first through third stepped coils 6 through 8 that are adjacent to each other in a circumferential direction of the core 1; and a bobbin-shaped coil 9 that is adjacent to the third stepped coil.

The stepped coils 6 through 8 each have large diameter portions 6a, 7a, and 8a that are adjacent to the core back portion 2; and small diameter portions 6b, 7b, and 8b that are adjacent to the large diameter portions 6a, 7a, and 8a on a radially inner side of the core 1. Step portions 6c, 7c, and 8c that result from these differences in diameter are formed between each of the large diameter portions 6a, 7a, and 8a and each of the small diameter portions 6b, 7b, and 8b. The number of winding layers of the coil conductors in the small diameter portions 6b, 7b, and 8b is less than the number of winding layers of the coil conductors in the large diameter portions 6a, 7a, and 8a, thereby making the small diameter portions 6b, 7b, and 8b smaller in diameter than the large diameter portions 6a, 7a, and 8a.

The positions of the step portions 6c, 7c, and 8c in each of the coil segments 5 are offset toward the radially inner side of the core 1 sequentially from the first stepped coil 6, which is positioned at a first circumferential end portion of the core 1. Cross-sectional shapes of the stepped coils 6 through 8 are bilaterally symmetrical relative to centers of the tooth portions 3. In the bobbin-shaped coil 9, the diameters of two end portions in a radial direction of the core 1 are greater than the diameter of an intermediate portion. A cross-sectional shape of the bobbin-shaped coil 9 is also bilaterally symmetrical relative to the center of the tooth portion 3.

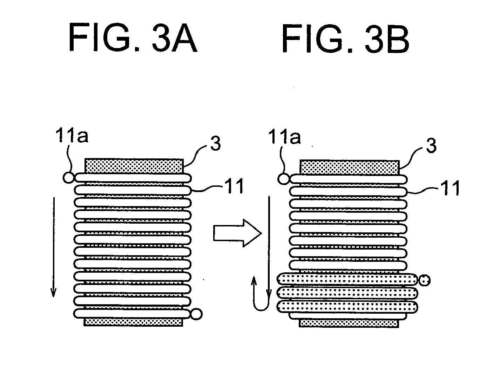

Here, Figures 3A and 3B are explanatory diagrams that show a method for winding the respective coils 6 through 9 from Figure 1. Figure 3A shows a state in which a first layer is wound. The coil conductor 11 in the first layer is neatly arrayed while being wound progressively by a winding machine from a winding start portion 11a that is positioned near the core back portion 2 toward a tip end portion of the tooth portion 3. As shown in Figure 3B, the coil conductor 11 in a second layer is neatly arrayed while being wound progressively on top of the first layer in a reverse direction from the first layer. The coil conductor 11 is subsequently wound in a similar manner to obtain a required number of layers. This kind of winding method is generally called "regular winding". In the coils 6 through 9, the number of layers of coil conductor 11 differs depending on position in a longitudinal direction of the tooth portions 3.

In a dynamoelectric stator such as that described above, because the positions of the step portion 6c, 7c, and 8c in each of the coil segments 5 are offset toward the radially inner side of the core 1 sequentially from the first stepped coil 6, which is positioned at the first circumferential end portion of the core 1, space factor of the coils 6 through 9 can be raised further while preventing contact between the coils 6 through 9. Thus, damage to the coil conductor 11 can be prevented, and motor characteristics can be stabilized if the dynamoelectric machine is a motor.

In addition, coil groups 4 such as that described above can be produced easily if a winding pattern that produces a single coil segment 5 is repeated for the number of coil segments 5.

Because the bobbin-shaped coil 9 is disposed at a second end portion of each of the coil segments 5, space factor of the coils 6 through 9 can be improved further.
In addition, because the core 1 is divided into a plurality of core segments 10 so as to correspond to the coil segments 5, adjacent core segments 10 can be joined and adjacent coil segments 5 can be connected after winding the coil segments 5 onto each of the core segments 10, enabling manufacturing to be facilitated.

Moreover, in the above example, the core 1 is divided into four core segments 10, but the segments are not limited to a particular number, and do not even need to be divided.
The number of stepped coils contained in a single coil segment is not limited to three, and may also be two, or four or more.
In addition, a bobbin-shaped coil does not necessarily have to be used, and the coil segments may also be constituted solely by stepped coils. In that case, since the shapes of all of the coils are similar, winding programs can be made uniform, further facilitating establishment of manufacturing techniques, and also making it easier to ensure stable quality.

## Claims

1. A dynamoelectric stator comprising:
a core that has an annular core back portion and a plurality of tooth portions that project radially outward from the core back portion; and
a coil group that is formed by winding a coil conductor onto the tooth portions by regular winding,
wherein:
the coil group is divided into a plurality of coil segments that are adjacent to each other in a circumferential direction of the core;
each of the coil segments includes a plurality of stepped coils that are adjacent to each other in a circumferential direction of the core;
each of the stepped coils has a large diameter portion that is adj acent to the core back portion, and a small diameter portion that is adjacent to the large diameter portion on a radially inner side of the core and that has a smaller diameter than that of the large diameter portion;
a step portion that results from the difference in diameter is formed between each of the large diameter portions and each of the small diameter portions; and
positions of the step portions in each of the coil segments are offset toward the radially inner side of the core sequentially from a stepped coil that is positioned at a first circumferential end portion of the core.

2. A dynamoelectric stator according to Claim 1, wherein a bobbin-shaped coil in which a diameter of two end portions in a radial direction of the core is greater than a diameter of an intermediate portion is included in each of the coil segments.

3. A dynamoelectric stator according to Claim 1, wherein the core is divided into a plurality of core segments so as to correspond to the coil segments.
